# EUROPÄISCHE PATENTANMELDUNG

(11) **EP 1 273 994 A2**
(43) Veröffentlichungstag der Anmeldung: **08.01.2003**
(21) Anmeldenummer: 02012853.4
(22) Anmeldetag: 11.06.2002
(51) Int. Cl.: G06F 1/00

(54) **Verfahren zum Schutz eines Mikrorechner-Systems gegen Manipulation von in einer Speicheranordnung des Mikrorechner-Systems gespeicherten Daten**

(30) Priorität: 02.07.2001 DE 10131575
(71) Anmelder: ROBERT BOSCH GMBH, 70442 Stuttgart (DE)
(72) Erfinder: Pischke, Juergen, 71287 Weissach (DE); Feilen, Oliver, 85296 Rohrbach (DE); Loechel, Norbert, 71120 Grafenau (DE); Miller, Norbert, 70372 Stuttgart (DE)

(57) **Zusammenfassung**

Die Erfindung betrifft ein Verfahren zum Schutz eines Mikrorechner-Systems (10) gegen Manipulation von in einer Speicheranordnung (27) des Mikrorechner-Systems (10) gespeicherten Daten (2). Insbesondere dient das Verfahren zum Schutz eines in der Speicheranordnung (27) eines Kraftfahrzeugsteuergeräts gepeicherten Steuerprogramms. Um einen besonders sicheren und zuverlässigen Schutz des Mikrorechner-Systems (10) gegen Manipulation der Daten (2) zu ermöglichen, wird vorgeschlagen, dass die Daten (2) mit Hilfe eines asymmetrischen Verschlüsselungsverfahrens in der Speicheranordnung (27) signiert oder verschlüsselt abgelegt werden. Es wird insbesondere vorgeschlagen, dass die Daten (2) außerhalb des Mikrorechner-Systems (10) mit Hilfe eines Verschlüsselungsalgorithmus und eines lediglich einem beschränkten Personenkreis zugänglichen privaten Schlüssels (6) verschlüsselt und in dem Mikrorechner-System (10) mit Hilfe eines Entschlüsselungsalgorithmus und eines frei zugänglichen öffentlichen Schlüssels (12) entschlüsselt werden.

## Beschreibung

Die vorliegende Erfindung betrifft ein Verfahren zum Schutz eines Mikrorechner-Systems gegen Manipulation von in einer Speicheranordnung des Mikrorechner-Systems gespeicherten Daten. Die Daten sind beispielsweise ein Programm, Grenzwerte, Kennfelder oder Parameter.

Die Erfindung betrifft außerdem ein Speicherelement für ein Mikrorechner-System. Auf dem Speicherelement ist ein Computerprogramm abgespeichert, das auf einem Rechengerät des Mikrorechner-Systems, insbesondere auf einem Mikroprozessor, ablauffähig ist. Das Speicherelement ist bspw. als ein Read-Only-Memory, als ein Random-Access-Memory oder als ein Flash-Memory ausgebildet.

Die vorliegende Erfindung betrifft des weiteren ein Computerprogramm, das auf einem Rechengerät, insbesondere auf einem Mikroprozessor, ablauffähig ist.

Schließlich betrifft die vorliegende Erfindung ein Mikrorechner-System mit einem Rechengerät, insbesondere einem Mikroprozessor, mit einer Speicheranordnung, in der Daten, insbesondere ein Programm, gespeichert sind und mit einem Speicherelement.

### Stand der Technik

Aus dem Stand der Technik ist es bekannt, Verfahren der eingangs genannten Art bspw. zur Verhinderung einer unbefugten Manipulation eines in einem Steuergerät eines Kraftfahrzeugs abgelegten Steuerprogramms oder von dort abgelegten Parametern oder Grenzwerten einzusetzen. Das Steuerprogramm steuert oder regelt bestimmte Funktionen oder Einheiten in dem Kraftfahrzeug, bspw. eine Brennkraftmaschine, eine Fahrdynamikregelung, ein Antiblockiersystem (ABS) oder ein elektronisches Lenksystem (Steer-by-Wire). Das Steuerprogramm ist in einer als wiederbeschreibbarer Speicher, insbesondere als Flash-Speicher, ausgebildeten Speicheranordnung gespeichert. Aufgrund einer Manipulation des Steuerprogramms, der Parameter oder der Grenzwerte kann es zu einem Defekt bzw. zu einer Veränderung der Wirkungsweise der gesteuerten oder geregelten Einheit kommen. Deshalb sollte eine Manipulation des Steuerprogramms, der Parameter oder der Grenzwerte nach Möglichkeit verhindert werden, zumindest aber sollte die Manipulation im Nachhinein erkennbar sein, damit die Ursache eines Defekts einer gesteuerten oder geregelten Einheit festgestellt werden kann bzw. damit Gewährleistungsansprüche richtig zugeordnet werden können.

Trotz der Gefahr einer Manipulation des Steuerprogramms, der Parameter oder der Grenzwerte durch unbefugte Personen, ist es nicht sinnvoll den Zugriff auf die Speicheranordnung eines Steuergeräts völlig zu verbieten. Um bspw. eine Umprogrammierung des Steuergeräts vornehmen zu können, muss es einem befugten Benutzerkreis möglich sein, auf die Speicheranordnung zuzugreifen. Es kann nämlich erforderlich sein, von Zeit zu Zeit eine neue Version eines Steuerprogramms oder neue Parameter oder Grenzwerte in dem Steuergerät abzulegen, um bspw. Fehler in der Software zu beseitigen oder neuen gesetzlichen Vorgaben Rechnung zu tragen.

Aus der DE 197 23 332 A1 ist es zur Überprüfung von in einem wiederbeschreibbaren Speicher eines Kraftfahrzeugsteuergeräts abgelegten Daten auf Manipulation bekannt, über den Inhalt oder eines Teils des Inhalts des wiederbeschreibbaren Speichers eine Checksumme zu bilden und diese mit einer Vergleichs-Checksumme zu vergleichen. Die Vergleichs-Checksumme wird anhand zu programmierender Daten vor der Programmierung des Steuergeräts ermittelt und in dem wiederbeschreibbaren Speicher des Steuergeräts abgelegt. Falls die Checksumme und die Vergleichs-Checksumme nicht übereinstimmen, wird von einer Manipulation der Daten ausgegangen und das Steuergerät für den weiteren Betrieb gesperrt. Das bekannte Verfahren ist jedoch relativ einfach und vermag nicht alle Manipulationen in einem gespeicherten Steuerprogramm zu erkennen. Außerdem kann das bekannte Verfahren auf relativ einfache Weise gezielt manipuliert werden, um so ein Blockieren des Steuergeräts zu unterbinden. Derart manipulierte Steuergeräte können ohne weiteres mit manipulierten Daten, insbesondere mit einem manipulierten Steuerprogramm, betrieben werden.

Der vorliegenden Erfindung liegt deshalb die Aufgabe zugrunde, den Schutz von in der Speicheranordnung eines Mikrorechner-Systems abgelegten Daten gegen Manipulation sicherer und zuverlässiger zu gestalten.

Zur Lösung dieser Aufgabe schlägt die Erfindung ausgehend von dem Verfahren der eingangs genannten Art vor, dass die Daten im Rahmen einer Neu- oder Umprogrammierung des Mikrorechner-Systems zumindest teilweise mit Hilfe eines asymmetrischen Verschlüsselungsverfahrens signiert oder verschlüsselt an die Speicheranordnung übertragen werden.

### Vorteile der Erfindung

Eine Entschlüsselung der an die Speicheranordnung übertragenen verschlüsselten Daten bzw. eine Überprüfung der Signatur der an die Speicheranordnung übertragenen signierten Daten kann unmittelbar nach der Übertragung der Daten an das Mikrorechner-System und vor dem Ablegen der Daten in der Speicheranordnung erfolgen. Alternativ können die Daten aber auch verschlüsselt bzw. signiert in der Speicheranordnung abgelegt und vor einer Verarbeitung durch einen Mikroprozessor des Mikrorechner-Systems entschlüsselt bzw. überprüft werden. Die Gesamtheit aller Daten, die an das Mikrorechner-System übertragen wird, kann in verschiedenen Speichern des Mikrorechner-Systems, u.a. auch in der Speicheranordnung, abgelegt werden.

Ein asymmetrisches Verschlüsselungsverfahren ist bspw. das sog. RSA-Verfahren, das nach seinen Entwicklern (Rivest, Shamir, Adleman) benannt ist. Dieses Verfahren arbeitet mit einem lediglich einem beschränkten Personenkreis zugänglichen privaten Schlüssel zum Signieren oder Verschlüsseln der Daten und mit einem frei zugänglichen öffentlichen Schlüssel zum Überprüfen der Signatur oder zum Entschlüsseln der Daten. Der private und der öffentliche Schlüssel sind aufeinander abgestimmt.

Der private Schlüssel ist bspw. nur dem Hersteller der Daten, insbesondere nur einem Programmierer eines Steuerprogramms, zugänglich. Mit Hilfe des privaten Schlüssels werden die Daten außerhalb des Mikrorechner-Systems, bspw. beim Hersteller oder Programmierer die Daten, signiert oder verschlüsselt, bevor sie in die Speicheranordnung des Mikrorechner-Systems übertragen werden.

In dem Steuergerät wird dann anhand des öffentlichen Schlüssels die Signatur überprüft oder werden die Daten entschlüsselt. Der öffentliche Schlüssel eignet sich besonders gut für den Einsatz in einem Mikrorechner-Systemen, insbesondere in Kraftfahrzeugsteuergeräten, da er durch unbefugte Dritte zwar theoretisch aus dem Speicher des Mikrorechner-Systems ausgelesen werden kann. In der Praxis fangen Dritte allein mit dem öffentlichen Schlüssel jedoch nichts an, da ihnen der entsprechende private Schlüssel zur Signatur oder Verschlüsselung der Daten fehlt. Mit einem anderen privaten Schlüssel verschlüsselte Daten können in aller Regel nicht mit dem ausgelesenen öffentlichen Schlüssel entschlüsselt werden. Ebensowenig kann in aller Regel die Signatur von mit einem anderen privaten Schlüssel signierten Daten nicht mit dem ausgelesenen öffentlichen Schlüssel erfolgreich überprüft werden.

Das erfindungsgemäße Verfahren bietet somit auf relativ einfache Weise ein Höchstmaß an Sicherheit und Zuverlässigkeit für den Manipulations- und Tuningschutz von in einer Speicheranordnung eines Mikrorechner-Systems abgelegten Daten. Das Verfahren eignet sich insbesondere für den Einsatz bei Kraftfahrzeugsteuergeräten, um eine Manipulation des Steuerprogramms durch unbefugte Dritte zu verhindern. Das Verfahren kann jedoch auch für andere Mikrorechner-Systeme aus beliebigen Einsatzbereichen eingesetzt werden.

Gemäß einer vorteilhaften Weiterbildung der vorliegenden Erfindung wird vorgeschlagen, dass die zu signierenden oder zu verschlüsselnden Daten außerhalb des Mikrorechner-Systems mit Hilfe eines lediglich einem beschränkten Personenkreis zugänglichen privaten Schlüssels und eines vorgebbaren Verschlüsselungsalgorithmus signiert oder verschlüsselt werden. Der Verschlüsselungsalgorithmus arbeitet bspw. nach dem an sich bekannten RSA-Verfahren.

Gemäß einer bevorzugten Ausführungsform der vorliegenden Erfindung wird vorgeschlagen, dass außerhalb des Mikrorechner-Systems zumindest ein Teil der Daten mit Hilfe eines Komprimierungsalgorithmus auf einen Fingerprint reduziert wird, aus dem Fingerprint mit Hilfe des privaten Schlüssels eine Signatur gebildet wird und die Signatur zusammen mit den Daten an das Mikrorechner-System übertragen wird. Der Komprimierungsalgorithmus arbeitet bspw. nach dem CRC (Cyclic Redundancy Check)-Verfahren oder nach dem MD5-Verfahren. Informationen zu dem MD5-Verfahren können der Internetseite http://www.forensicsintl.com/art12.html (Stand: 15.06.2001) entnommen werden, auf die ausdrücklich Bezug genommen wird. In dem Mikrorechner-System wird die Signatur dann überprüft, und, falls eine Manipulation der Daten erkannt wird, werden geeignete Maßnahmen ergriffen. Die Maßnahmen können ein sofortiges Blockieren des Mikrorechner-Systems, ein Blockieren zu einem späteren Zeitpunkt, bspw. beim nächsten Fahrzyklus, oder einen Notlaufbetrieb umfassen.

Gemäß einer anderen vorteilhaften Weiterbildung der vorliegenden Erfindung wird vorgeschlagen, dass die signierten oder verschlüsselten Daten in dem Mikrorechner-System mit Hilfe eines frei zugänglichen öffentlichen Schlüssels überprüft oder entschlüsselt werden. Der öffentliche Schlüssel ist in einem Speicher des Mikrorechner-Systems, vorzugsweise in einem Festwertspeicher bspw. in einem EEPROM (Electronically Erasable Programmable Read Only Memory), abgelegt. Bei dem erfindungsgemäßen Verfahren ergibt sich kein Sicherheitsrisiko dadurch, dass der öffentliche Schlüssel in dem-Mikrorechner-System abgelegt ist und eventuell ausgelesen werden könnte, da der dazugehörige private Schlüssel geheim ist.

Bei einer weiteren bevorzugten Ausführungsform der vorliegenden Erfindung wird vorschlagen, dass in dem Mikrorechner-System die Signatur mit Hilfe des öffentlichen Schlüssels zu einem entschlüsselten Fingerprint entschlüsselt wird, aus demselben Teil der Daten und mit Hilfe desselben vorgebbaren Komprimierungsalgorithmus wie bei der Bildung der Signatur außerhalb des Mikrorechner-Systems ein Referenz-Fingerprint gebildet wird und der entschlüsselte Fingerprint mit dem Referenz-Fingerprint verglichen wird. Vorzugsweise wird eine Manipulation der Daten erkannt, falls der entschlüsselte Fingerprint und der Referenz-Fingerprint nicht übereinstimmen.

Das Überprüfen der signierten oder das Entschlüsseln der verschlüsselten Daten kann zu verschiedenen Zeitpunkten ausgeführt werden. Insbesondere wird vorgeschlagen, dass das Überprüfen der signierten oder das Entschlüsseln der verschlüsselten Daten in dem Mikrorechner-System im Anschluss an eine Neu- oder Umprogrammierung der Speicheranordnung ausgeführt wird. Zu diesem Zeitpunkt besteht in der Regel kein Laufzeitproblem, so dass auch komplizierte und rechenintensive Komprimierungsalgorithmen und Verschlüsselungsalgorithmen eingesetzt werden können und der gesamte Inhalt der Speicheranordnung des Mikrorechner-Systems auf Manipulation überprüft werden kann. Bei einer erfolgreichen Überprüfung der Signatur bzw. bei einem erfolgreichen Entschlüsseln der Daten kann in einem vorgebbaren Speicherbereich der Speicheranordnung eine Kennung, beispielsweise eine Prüfsumme, abgelegt werden. Der Inhalt dieses Speicherbereichs kann dann zu beliebigen Zeitpunkten innerhalb kürzester Zeit abgefragt werden, um festzustellen, ob die in der Speicheranordnung abgelegten Daten manipuliert wurden oder nicht. Die Überprüfung des Inhalts des vorgebbaren Speicherbereichs kann während der Abarbeitung der Daten, insbesondere während der Laufzeit eines Steuerprogramms, erfolgen. Es ist auch denkbar, dass die Überprüfung des Inhalts des Speicherbereichs auf das Vorliegen der Kennung beim Hochfahren des Mikrorechner-Systems, vorzugsweise im Rahmen einer Bootroutine, oder vor, während oder nach dem Betrieb des Mikrorechner-Systems ausgeführt wird.

Des weiteren wird vorgeschlagen, dass das Überprüfen der signierten oder das Entschlüsseln der verschlüsselten Daten in dem Mikrorechner-System beim Hochfahren des Mikrorechner-Systems, vorzugsweise im Rahmen einer Bootroutine, ausgeführt wird. Um den Hochfahrvorgang des Mikrorechner-Systems nicht zu sehr zu verzögern, wird bei dieser Ausführungsform vorzugsweise nicht die gesamte Speicheranordnung, sondern lediglich ein Teil der Speicheranordnung überprüft. Das bedeutet, dass für den Inhalt verschiedener Teile der Speicheranordnung verschiedene Fingerprints ermittelt, aus den Fingerprints verschiedene Signaturen gebildet und die Signaturen zusammen mit den Daten an das Mikrorechner-System übertragen werden. In dem Mikrorechner-System wird dann bei jedem Hochfahren des Mikrorechner-Systems ein anderer Teil der Speicheranordnung überprüft, indem die entsprechende Signatur entschlüsselt und der entschlüsselte Fingerprint mit einem entsprechenden Referenz-Fingerprint verglichen wird.

Gemäß einer anderen bevorzugten Ausführungsform der vorliegenden Erfindung wird vorgeschlagen, dass das Überprüfen der signierten oder das Entschlüsseln der verschlüsselten Daten in dem Mikrorechner-System im Rahmen der Verarbeitung der Daten ausgeführt wird. Die Überprüfung bzw. Entschlüsselung der Daten erfolgt also während der Laufzeit der Daten. Wie oben bereits erwähnt, kann auch bei dieser Ausführungsform nur ein Teil des Inhalts der Speicheranordnung entschlüsselt bzw. überprüft werden. Die Verarbeitung und die Überprüfung bzw. Entschlüsselung der Daten sind vorzugsweise verschiedene unterschiedlich priorisierte Prozesse, die von dem Mikroprozessor des Mikrorechner-Systems sequentiell abgearbeitet werden. Im Rahmen der Abarbeitung des Prozesses zur Überprüfung bzw. Entschlüsselung der Daten kann stets der Inhalt des gleichen Teils der Speicheranordnung entschlüsselt bzw. überprüft werden oder aber bei jedem Aufruf des Prozesses wird der Inhalt eines anderen Teils der Speicheranordnung überprüft bzw. entschlüsselt, so dass nach einem längeren Fahrzyklus der Inhalt der gesamten Speicheranordnung überprüft bzw. entschlüsselt ist. Der Entschlüsselung bzw. Überprüfung der Daten wird vorzugsweise eine niedrigere Priorität als der Verarbeitung der Daten zugeordnet, so dass der Mikroprozessor die Daten dann entschlüsselt bzw. überprüft, wenn ihm die Verarbeitung der Daten genügend Rechenzeit übrig läßt. Bei einem als Kraftfahrzeugsteuergerät ausgebildeten Mikrorechner-System erfolgt die Überprüfung bzw. Entschlüsselung der Daten also während dem normalen Fahrbetrieb.

Als Komprimierungsalgorithmus wird vorzugsweise ein Hash-Algorithmus zur Bildung eines Hashwerts ausgeführt. Der Hash-Algorithmus arbeitet beispielsweise nach dem sogenannten MD5-Verfahren. Des Weiteren wird vorgeschlagen, dass als asymmetrisches Verschlüsselungsverfahren ein RSA-Verfahren ausgeführt wird.

Von besonderer Bedeutung ist die Realisierung des erfindungsgemäßen Verfahrens in der Form eines Speicherelements, das für ein Mikrorechner-System vorgesehen ist. Dabei ist auf dem Speicherelement ein Computerprogramm abgespeichert, das auf einem Rechengerät des Mikrorechner-Systems, insbesondere auf einem Mikroprozessor, ablauffähig und zur Ausführung des erfindungsgemäßen Verfahrens geeignet ist. In diesem Fall wird also die Erfindung durch ein auf dem Speicherelement abgespeichertes Computerprogramm realisiert, so dass dieses mit dem Computerprogramm versehene Speicherelement in gleicher Weise die Erfindung darstellt wie das Verfahren, zu dessen Ausführung des Computerprogramm geeignet ist. Als Speicherelement kann insbesondere ein elektrisches Speichermedium zur Anwendung kommen, beispielsweise ein Read-Only-Memory, ein Random-Access-Memory oder ein Flash-Memory.

Das Speicherelement kann in einem Mikrorechner-System bei dem Hersteller der Daten, insbesondere bei einem Programmierer eines Steuerprogramms, angeordnet sein, wobei dann auf dem Speicherelement ein Computerprogramm abgespeichert ist, das zur Ausführung des erfindungsgemäßen Verfahrens nach einem der Ansprüche 1 bis 3 geeignet ist. Das Verschlüsseln der Daten bzw. das Signieren der Daten erfolgt also in der Entwicklungsumgebung beim Hersteller der Daten. Ebenso kann das Speicherelement in einem als Steuergerät, insbesondere als Kraftfahrzeugsteuergerät, ausgebildeten Mikrorechner-System angeordnet sein, wobei auf dem Speicherelement dann ein Computerprogramm abgespeichert ist, das zur Ausführung des erfindungsgemäßen Verfahrens nach den Ansprüchen 4 bis 8 geeignet ist. Das Entschlüsseln der Daten bzw. die Überprüfung der Signatur der Daten erfolgt also in dem vorzugsweise als Steuergerät ausgebildeten Mikrorechner-System.

Die Erfindung betrifft auch ein Computerprogramm, das zur Ausführung des erfindungsgemäßen Verfahrens geeignet ist, wenn es auf einem Rechengerät, insbesondere auf einem Mikroprozessor, abläuft. Besonders bevorzugt ist dabei, wenn das Computerprogramm auf einem Speicherelement, insbesondere auf einem Flash-Memory, abgespeichert ist. Das Computerprogramm kann auf einem Mikrorechner-System beim Hersteller der Daten zur Ausführung des Verfahrens nach einem der Ansprüche 1 bis 3 ablaufen. Das Computerprogramm kann aber auch auf einem vorzugsweise als Steuergerät ausgebildeten Mikrorechner-System zur Ausführung des Verfahrens nach einem der Ansprüche 4 bis 8 ablaufen.

Schließlich wird als eine weitere Lösung der Aufgabe der vorliegenden Erfindung, ausgehend von dem Mikrorechner-System der eingangs genannten Art, vorgeschlagen, dass das Mikrorechner-System Mittel zur Ausführung des erfindungsgemäßen Verfahrens aufweist. Das Mikrorechner-System kann bei dem Hersteller der Daten angeordnet oder als ein Steuergerät bspw. für ein Kraftfahrzeug ausgebildet sein. Falls das Mikrorechner-System Mittel zur Ausführung eines Verfahrens nach einem der Ansprüche 1 bis 3 aufweist, ist es als ein Programmiergerät zur Neu- oder Umprogrammierung der Speicheranordnung eines Steuergeräts ausgebildet. Wenn das Mikrorechner-System Mittel zur Ausführung eines Verfahrens nach einem der Ansprüche 4 bis 8 aufweist, ist es dagegen als das Steuergerät ausgebildet.

Gemäß einer vorteilhaften Weiterbildung der vorliegenden Erfindung wird vorgeschlagen, dass die Mittel zur Ausführung des Verfahrens als ein auf dem Speicherelement abgespeichertes und auf dem Rechengerät des Mikrorechner-Systems ablauffähiges Computerprogramm ausgebildet sind.

### Zeichnungen

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von jeder Zusammenfassung in den Patentansprüchen oder deren Rückbeziehung sowie unabhängig von jeder Formulierung bzw. Darstellung in der Beschreibung bzw. in der Zeichnung. Es zeigen:
- Fig. 1: ein Ablaufdiagramm des erfindungsgemäßen Verfahrens gemäß einer bevorzugten Ausführungsform;
- Fig. 2: zwei verschiedene erfindungsgemäße Mikrorechner-Systeme zur Ausführung des erfindungsgemäßen' Verfahrens; und
- Fig. 3: ein Ablaufdiagramm eines Teils des erfindungsgemäßen Verfahrens.

### Beschreibung der Ausführungsbeispiele

Gegenstand der vorliegenden Erfindung ist ein Verfahren zum Schutz eines Mikrorechner-Systems gegen Manipulation von in einer Speicheranordnung des Mikrorechner-Systems gespeicherten Daten. Das Mikrorechner-System ist bspw. als ein Steuergerät für ein Kraftfahrzeug ausgebildet. Die Daten sind bspw. als ein Steuerprogramm, als Grenzwerte, Kennfelder oder Parameterwerte ausgebildet. Bei dem Verfahren werden die Daten mit Hilfe eines asymmetrischen Verschlüsselungsverfahrens in der Speicheranordnung signiert oder verschlüsselt abgelegt. Vor der Ausführung oder Nutzung der Daten werden diese in dem Steuergerät zu bestimmten Zeitpunkten und in einem bestimmten Umfang verifiziert. Falls die Verifikation scheitert, wird die Ausführung der Daten bzw. das Mikrorechner-System gesperrt.

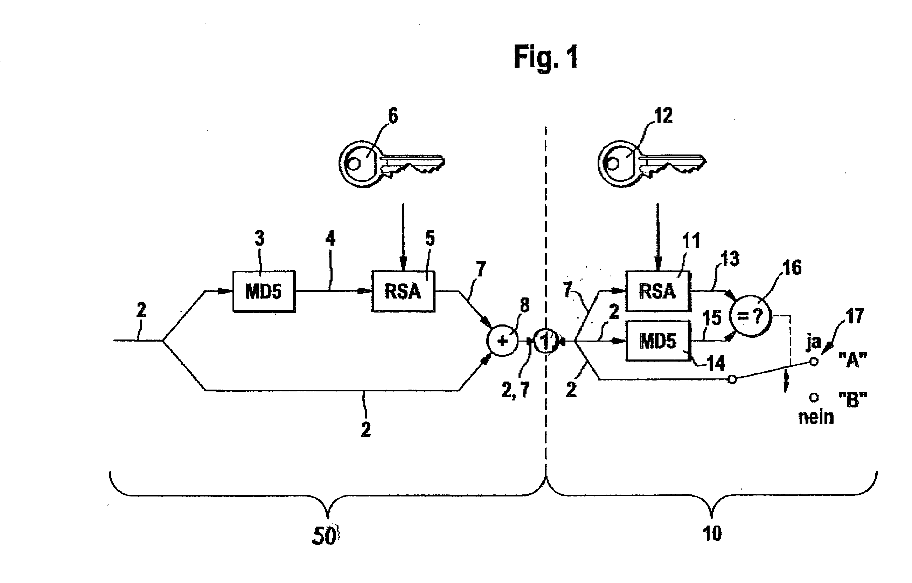

In Fig. 1 ist ein Ablaufdiagramm eines erfindungsgemäßen Verfahrens gemäß einer bevorzugten Ausführungsform dargestellt. Die Ausführung des erfindungsgemäßen Verfahrens beginnt in einem Mikrorechner-System 50, das bei einem Hersteller von Daten 2, insbesondere bei einem Programmierer eines Steuerprogramms, angeordnet ist. In dem Mikrorechner-System 50 werden die zu programmierenden Daten 2 oder ein Teil davon in der Entwicklungsumgebung signiert. In einem Funktionsblock 3 werden die Daten 2 anhand eines Komprimierungsalgorithmus auf einen Fingerprint 4 reduziert. Der Komprimierungsalgorithmus ist bspw. als ein Hash-Algorithmus, insbesondere nach dem MD5-Verfahren ausgebildet. In diesem Fall wird der Fingerprint 4 auch als Hashwert bzw. MD5-Hashwert bezeichnet. Der Fingerprint 4 wird in einem Funktionsblock 5 mit Hilfe eines vorgebbaren Verschlüsselungsalgorithmus und eines lediglich einem beschränkten Personenkreis zugänglichen privaten Schlüssels 6 verschlüsselt. Als Verschlüsselungsalgorithmus kann beispielsweise der sogenannte RSA-Algorithmus verwendet werden. Der verschlüsselte Fingerprint wird als Signatur 7 bezeichnet. In einem Funktionsblock 8 wird die Signatur 7 an die Daten 2 angehängt und zusammen mit diesen an ein Programmiergerät 1 übertragen.

Das Programmiergerät 1 steht bspw. in einer Kraftfahrzeugwerkstatt und dient zur Neu- oder Umprogrammierung eines als Kraftfahrzeugsteuergerät ausgebildeten Mikrorechner-Systems 10. Von dem Programmiergerät 1 werden die Daten 2 und die Signatur 7 an das Steuergerät 10 übertragen.

In dem Steuergerät 10 werden die Daten 2 von der Signatur 7 getrennt. In einem Funktionsblock 11 wird die Signatur 7 mit Hilfe eines Entschlüsselungsalgorithmus und eines frei zugänglichen öffentlichen Schlüssels 12 zu einem entschlüsselten Fingerprint 13 entschlüsselt. Als Entschlüsselungsalgorithmus kann beispielsweise ein RSA-Algorithmus eingesetzt werden. Wichtig ist, dass der in dem Funktionsblock 11 eingesetzte Entschlüsselungsalgorithmus auf den in dem Funktionsblock 5 eingesetzten Verschlüsselungsalgorithmus abgestimmt ist. In einem Funktionsblock 14 wird aus demselben Teil der Daten 2 mit Hilfe desselben Komprimierungsalgorithmus wie bei der Bildung der Signatur 7 in dem Programmiergerät 1 ein Referenz-Fingerprint 15 gebildet. In einem Funktionsblock 16 wird dann überprüft, ob der entschlüsselte Fingerprint 13 und der Referenz-Fingerprint 15 gleich sind. In Abhängigkeit von dem Ergebnis dieser Abfrage wird ein Schaltelement 17 geschaltet, und die Daten 2 werden entweder abgearbeitet (Position "A") oder blockiert (Position "B"). Falls in Abfrageblock 16 festgestellt wird, dass der entschlüsselte Fingerprint 13 und der Referenz-Fingerprint 15 übereinstimmen, wurde die Signatur 7 der Daten 2 erfolgreich überprüft, und die Daten 2 können abgearbeitet werden (Schaltelement 17 in Position "A"). Andernfalls wird von manipulierten Daten 2 ausgegangen, und die Ausführung der Daten 2 wird blockiert bzw. die Daten 2 werden in einem Notlaufbetrieb abgearbeitet (Schaltelement 17 in Position "B").

Durch das erfindungsgemäße Verfahren kann die Manipulations- bzw. Tuningschutz bei der Neu- bzw. Umprogrammierung von Steuergeräten 10 entscheidend verbessert werden. Insbesondere kann eine Manipulation von in einer Speicheranordnung des Steuergeräts 10 abgelegten Daten 2 sicher und zuverlässig erkannt werden.

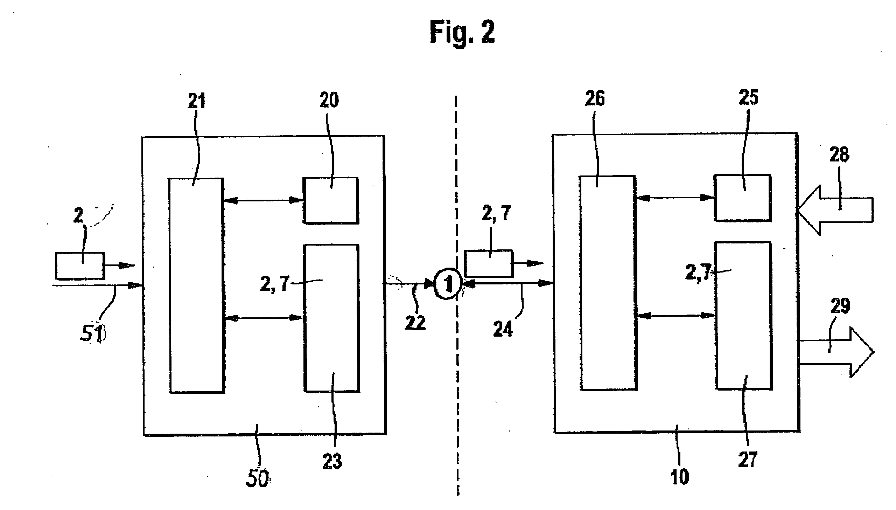

In Fig. 2 sind das Mikrorechner-System 50 und das Steuergerät 10 zur Ausführung des erfindungsgemäßen Verfahrens genauer dargestellt. Dazwischen ist das Programmiergerät 1 angeordnet, das über eine erste Datenübertragungsverbindung 22 mit dem Mikrorechner-System 50 und über eine zweite Datenübertragungsverbindung 24 mit dem Steuergerät 10 in Verbindung steht. Die Datenübertragung von dem Mikrorechner-System 50 an das Programmiergerät 1 über die Verbindung 22 kann auf beliebigem Wege erfolgen. Die Datenübertragung kann bspw. mittels eines elektrischen, magnetischen oder optischen Speichermediums erfolgen, auf dem die Daten 2 abgespeichert sind. Das Speichermedium kann in eine geeignete Lesevorrichtung des Programmiergeräts 1 eingelegt und die Daten 2 können in das Programmiergerät 1 eingelesen werden, wo sie in einer Speicheranordnung 23 abgelegt werden. Alternativ kann die Datenübertragung auch über ein Datennetzwerk, bspw. das Internet erfolgen. Dabei werden die Daten 2 bspw. als Anhang an eine elektronische Nachricht (email) oder nach einem File Transfer Protocol (FTP) versandt. Die Datenübertragung von dem Programmiergerät 1 an das Steuergerät 10 über die Verbindung 24 kann ebenfalls auf beliebigem Wege, beispielsweise leitungsgebunden, optisch oder über Funk erfolgen. Auch das Übertragungsverfahren kann beliebig gewählt werden und bspw. seriell, parallel oder nach einem bestimmten Bus-Protokoll erfolgen.

Das Mikrorechner-System 50 ist bspw. als ein Personal Computer (PC) ausgebildet und umfasst ein Speicherelement 20, auf dem ein Computerprogramm abgespeichert ist, das zur Ausführung des im linken Teil von Fig. 1 dargestellten erfindungsgemäßen Verfahrens geeignet ist. Das Speicherelement 20 ist bspw. als ein wiederbeschreibbarer Speicher, insbesondere als ein Flash-Speicher, ausgebildet. Das in dem Speicherelement 20 abgespeicherte Computerprogramm ermöglicht insbesondere eine Reduktion der Daten 2 auf den Fingerprint 4 anhand des Komprimierungsalgorithmus, eine Verschlüsselung des Fingerprints 4 mit Hilfe des Verschlüsselungsalgorithmus und des privaten Schlüssels 6 zu der Signatur 7, und die Übertragung der Daten 2 mit der Signatur 7 an das Steuergerät 10. Das in dem Speicherelement 20 abgespeicherte Computerprogramm wird von einem Rechengerät 21, das insbesondere als ein Mikroprozessor ausgebildet ist, abgearbeitet. Die Daten 2, mit denen das Steuergerät 10 programmiert werden soll, gelangen beim Hersteller der Daten 2 über eine weitere Datenübertragungsverbindung 51 in das Mikrorechner-System 50.

Die Daten 2 werden dann zusammen mit der Signatur 7 von dem Mikrorechner-System 50 über die Verbindung 22, das Programmiergerät 1 und die Verbindung 24 zur Neu- oder Umprogrammierung an das Steuergerät 10 übertragen. Die Verbindung 24 ist als eine bidirektionale Verbindung ausgebildet, um in die eine Richtung die Daten 2 und die Signatur 7 an das Steuergerät 10 zu übertragen und um in der anderen Richtung Rückmeldungen des Steuergeräts 10 an das Programmiergerät 1 über den Verlauf des Programmiervorgangs zu ermöglichen.

Das Steuergerät 10 weist ein Speicherelement 25 auf, in dem ein Computerprogramm abgelegt ist, das zur Durchführung des in dem rechten Teil der Fig. 1 dargestellten Teils des erfindungsgemäßen Verfahrens geeignet ist. Das Speicherelement 25 ist bspw. als ein wiederbeschreibbarer Speicher, insbesondere als ein Flash-Speicher, ausgebildet. Das in dem Speicherelement 25 abgelegte Computerprogramm ist insbesondere dazu geeignet, die Signatur 7 mit Hilfe des Entschlüsselungsalgorithmus und des öffentlichen Schlüssels 12 zu entschlüsseln, aus den Daten 2 mit Hilfe des Komprimierungsalgorithmus den Referenz-Fingerprint 15 zu ermitteln, den entschlüsselten Fingerprint 13 mit dem Referenz-Fingerprint 15 zu vergleichen und ein Schaltelement 17 entsprechend dem Ergebnis des Vergleichs anzusteuern.

Das Steuergerät 10 umfasst des Weiteren ein Rechengerät 26, das insbesondere als ein Mikroprozessor ausgebildet ist, zur Abarbeitung des in dem Speicherelement 25 abgelegten Computerprogramms. Die über die Datenübertragungsverbindung 24 an das Steuergerät 10 übertragenen Daten 2 und die Signatur 7 werden in einer Speicheranordnung 27 des Steuergeräts 10 abgelegt. Die Speicheranordnung 27 ist als ein wiederbeschreibbarer Speicher ausgebildet.

Das Steuergerät 10 dient zur Steuerung und/oder Regelung von Funktionen in einem Kraftfahrzeug, bspw. zur Steuerung und/oder Regelung einer Brennkraftmaschine, eines elektronischen Bremssystems (brake-by-wire), eines elektronischen Lenksystems (steer-by-wire) oder eines Fahrdynamiksystems. Das Steuergerät 10 erhält Informationen über den Zustand der zu steuernden und/oder zu regelnden Kraftfahrzeugfunktion über Eingangssignale 28 von Sensoren oder Messwertaufnehmern (nicht dargestellt). In Ausführung des in der Speicheranordnung 27 abgelegten Steuerprogramms unter Nutzung der ebenfalls in der Speicheranordnung 27 abgelegten Parameter und Grenzwerte werden in Abhängigkeit der Eingangssignale 28 Ausgangssignale 29 zur Ansteuerung von Aktoren und zur Beeinflussung der zu steuernden und/oder zu regelnden Kraftfahrzeugfunktionen generiert.

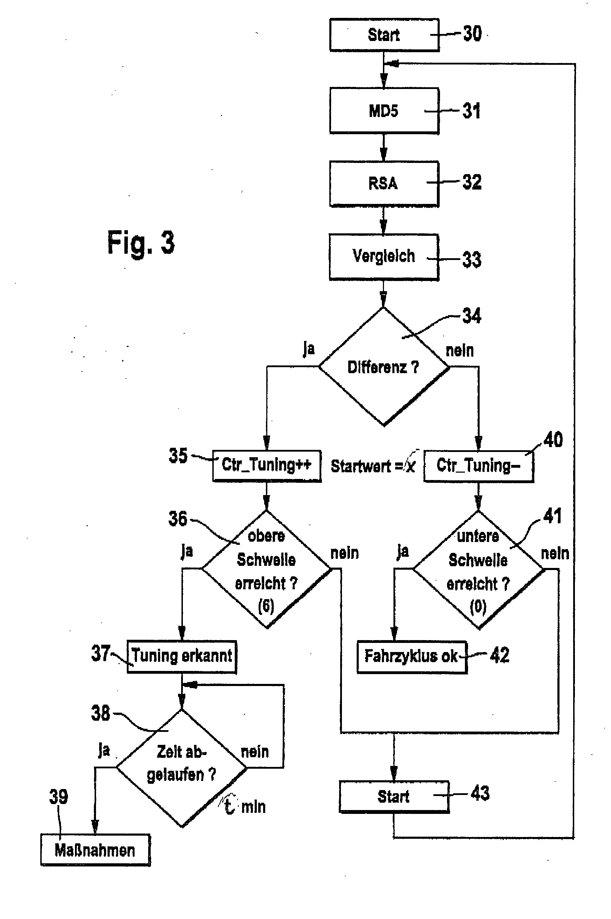

In Fig. 3 ist ein Ablaufdiagramm des in dem Steuergerät 10 ablaufenden Teils des erfindungsgemäßen Verfahrens dargestellt. Der in Fig. 3 dargestellte Teil des Verfahrens wird während der Laufzeit des Steuergeräts 10, also während des normalen Fahrbetriebs des Kraftfahrzeugs, ausgeführt. Das Verfahren beginnt in einem Funktionsblock 30. In einem Funktionsblock 31 wird anhand des MD5-Verfahrens aus den Daten 2 bzw. aus einem vorgebbaren Teil der Daten 2 der Referenz-Fingerprint 15 gebildet. In einem Funktionsblock 32 wird die Signatur 7 mit Hilfe des RSA-Verfahrens entschlüsselt. Der Funktionsblock 32 liefert als Ausgangswert den entschlüsselten Fingerprint 13. In einem Funktionsblock 33 werden dann der entschlüsselte Fingerprint 13 und der Referenz-Fingerprint 15 miteinander verglichen.

In einem Abfrageblock 34 wird überprüft, ob es eine Differenz zwischen dem entschlüsselten Fingerprint 13 und dem Referenz-Fingerprint 15 gibt. Falls ja, bedeutet dies, dass die in der Speicheranordnung 27 abgelegten Daten 2 manipuliert sind. In diesem Fall wird in einem Funktionsblock 35 eine Laufvariable Ctr_Tuning um 1 hochgezählt. Als Startwert für die Laufvariable Ctr_Tuning wird eine positive ganze Zahl x gewählt. In einem Abfrageblock 36 wird überprüft, ob ein oberer Schwellenwert, der in diesem Ausführungsbeispiel auf 6 gesetzt ist, erreicht ist. Falls ja, wird in einem Funktionsblock 37 eine Manipulation der in der Speicheranordnung 27 abgelegten Daten 2 erkannt. In einem Abfrageblock 38 wird dann im Rahmen einer Endlosschleife überprüft, ob eine vorgebbare Zeitdauer t (im vorliegenden Fall mehrere t Minuten) verstrichen ist. Wenn diese Zeitdauer verstrichen ist, werden in einem Funktionsblock 39 geeignete.Maßnahmen ergriffen. Diese Maßnahmen können ein sofortiges Blockieren der Ausführung der Daten 2, ein Blockieren der Daten 2 beim nächsten Start des Steuergeräts 10 oder ein geeigneter Notlaufbetrieb des Steuergeräts 10 mit vorgegebenen Daten sein.

Falls sich in dem Abfrageblock 34 ergibt, dass der entschlüsselte Fingerprint 13 gleich dem Referenz-Fingerprint 15 ist, wird zu einem Funktionsblock 40 verzweigt, wo die Laufvariable Ctr_Tuning um 1 erniedrigt wird. In einem Abfrageblock 41 wird überprüft, ob ein unterer Schwellenwert, der in dem vorliegenden Ausführungsbeispiel auf 0 gesetzt ist, erreicht ist. Falls ja, sind die in der Speicheranordnung 27 abgelegten Daten 2 in Ordnung, und in einem Funktionsblock 42 wird ein normaler Fahrzyklus ausgeführt, wobei die Daten 2 ganz normal abgearbeitet werden.

Falls der untere Schwellenwert in dem Abfrageblock 41 noch nicht erreicht ist, wird zu einem Funktionsblock 43 verzweigt, wo die Startwerte für einen neuen Prüfzyklus gesetzt werden. Zu dem Funktionsblock 43 wird auch von dem Abfrageblock 36 aus verzweigt, falls der obere Schwellenwert noch nicht erreicht ist. Von dem Funktionsblock 43 aus wird dann zu dem Funktionsblock 31 verzweigt, wo die Signatur 7 der Daten 2 in einem neuen Prüfzyklus überprüft wird.

Das in Fig. 3 dargestellte Verfahren wird so lange ausgeführt, bis die Ausführung oder Verarbeitung der Daten 2 in dem Funktionsblock 39 gesperrt wird oder bis die Ausführung oder Nutzung der Daten 2 in dem Funktionsblock 42 freigegeben wird.

## Patentansprüche

1. Verfahren zum Schutz eines Mikrorechner-Systems (10) gegen Manipulation von in einer Speicheranordnung (27) des Mikrorechner-Systems (10) gespeicherten Daten (2), insbesondere zum Schutz eines in der Speicheranordnung (27) gespeicherten Programms, **dadurch gekennzeichnet, dass** die Daten (2) im Rahmen einer Neu- oder Umprogrammierung des Mikrorechner-Systems (10) zumindest teilweise mit Hilfe eines asymmetrischen Verschlüsselungsverfahrens signiert oder verschlüsselt an die Speicheranordnung (27) übertragen werden.

2. Verfahren nach Anspruch 1, **dadurch gekennzeichnet, dass** die zu signierenden oder zu verschlüsselnden Daten (2) außerhalb des Mikrorechner-Systems (10) mit Hilfe eines lediglich einem beschränkten Personenkreis zugänglichen privaten Schlüssels (6) und eines vorgebbaren Verschlüsselungsalgorithmus signiert oder verschlüsselt werden.

3. Verfahren nach Anspruch 2, **dadurch gekennzeichnet, dass** außerhalb des Mikrorechner-Systems (10) zumindest ein Teil der Daten (2) mit Hilfe eines Komprimierungsalgorithmus auf einen Fingerprint (4) reduziert wird, aus dem Fingerprint (4) mit Hilfe des privaten Schlüssels (6) eine Signatur (7) gebildet wird und die Signatur (7) zusammen mit den Daten (2) an das Mikrorechner-System (10) übertragen wird.

4. Verfahren nach einem der Ansprüche 1 bis 3, **dadurch gekennzeichnet, dass** die signierten oder verschlüsselten Daten (2, 7) in dem Mikrorechner-System (10) mit Hilfe eines frei zugänglichen öffentlichen Schlüssels (12) überprüft oder entschlüsselt werden.

5. Verfahren nach Anspruch 3 und 4, **dadurch gekennzeichnet, dass** in dem Mikrorechner-System (10) die Signatur (7) mit Hilfe des öffentlichen Schlüssels (12) zu einem entschlüsselten Fingerprint (13) entschlüsselt wird, aus demselben Teil der Daten (2) und mit Hilfe desselben vorgebbaren Komprimierungsalgorithmus wie bei der Bildung der Signatur (7) außerhalb des Mikrorechner-Systems (10) ein Referenz-Fingerprint (15) gebildet wird und der entschlüsselte Fingerprint (13) mit dem Referenz-Fingerprint (15) verglichen wird.

6. Verfahren nach Anspruch 4 oder 5, **dadurch gekennzeichnet, dass** das Überprüfen der signierten oder das Entschlüsseln der verschlüsselten Daten (2, 7) in dem Mikrorechner-System (10) im Anschluß an eine Neu- oder Umprogrammierung der Speicheranordnung (27) ausgeführt wird.

7. Verfahren nach Anspruch 4 oder 5, **dadurch gekennzeichnet, dass** das Überprüfen der signierten oder das Entschlüsseln der verschlüsselten Daten (2, 7) in dem Mikrorechner-System (10) beim Hochfahren des Mikrorechner-Systems (10), vorzugsweise im Rahmen einer Bootroutine, ausgeführt wird.

8. Verfahren nach Anspruch 4 oder 5, **dadurch gekennzeichnet, dass** das Überprüfen der signierten oder das Entschlüsseln der verschlüsselten Daten (2, 7) in dem Mikrorechner-System (10) im Rahmen der Verarbeitung der Daten (2) ausgeführt wird.

9. Verfahren nach einem der Ansprüche 3 bis 8, **dadurch gekennzeichnet, dass** als Komprimierungsalgorithmus ein Hash-Algorithmus zur Bildung eines Hashwerts ausgeführt wird.

10. Verfahren nach einem der Ansprüche 1 bis 9, **dadurch gekennzeichnet, dass** als asymmetrisches Verschlüsselungsverfahren ein RSA-Verfahren ausgeführt wird.

11. Speicherelement (20, 25), insbesondere Read-Only-Memory, Random-Access-Memory oder Flash-Memory, für ein Mikrorechner-System (1, 10), auf dem ein Computerprogramm abgespeichert ist, das auf einem Rechengerät (21, 26), insbesondere auf einem Mikroprozessor, ablauffähig und zur Ausführung eines Verfahrens nach einem der Ansprüche 1 bis 10 geeignet ist.

12. Computerprogramm, das auf einem Rechengerät (21, 26), insbesondere auf einem Mikroprozessor, ablauffähig ist, **dadurch gekennzeichnet, dass** das Computerprogramm zur Ausführung eines Verfahrens nach einem der Ansprüche 1 bis 10 geeignet ist, wenn es auf dem Rechengerät (21, 26) abläuft.

13. Computerprogramm nach Anspruch 12, **dadurch gekennzeichnet, dass** das Computerprogramm auf einem Speicherelement (20, 25), insbesondere auf einem Flash-Memory, abgespeichert ist.

14. Mikrorechner-System (1, 10) mit einem Rechengerät (21, 26), insbesondere einem Mikroprozessor, mit einer Speicheranordnung (23, 27), in der Daten (2), insbesondere ein Programm, gespeichert sind und mit einem Speicherelement (20, 25), **dadurch gekennzeichnet, dass** das Mikrorechner-System (1, 10) Mittel zur Ausführung eines Verfahrens nach einem der Ansprüche 1 bis 10 aufweist.

15. Mikrorechner-System (1, 10) nach Anspruch 14, **dadurch gekennzeichnet, dass** die Mittel zur Ausführung des Verfahrens als ein auf dem Speicherelement (20, 25) abgespeichertes und auf dem Rechengerät (21, 26) ablauffähiges Computerprogramm ausgebildet sind.
